(19) Europäisches Patentamt
European Patent Office
Office européen des brevets

(11) EP 1 285 027 B2

(12) NEW EUROPEAN PATENT SPECIFICATION
After opposition procedure

(45) Date of publication and mention of the opposition decision:
**30.09.2009 Bulletin 2009/40**

(45) Mention of the grant of the patent:
**29.09.2004 Bulletin 2004/40**

(21) Application number: **01912783.6**

(22) Date of filing: **16.02.2001**

(51) Int Cl.:
***C08L 69/00*** (2006.01) ***C08K 5/3475*** (2006.01)
***C08G 64/14*** (2006.01)

(86) International application number:
**PCT/US2001/005115**

(87) International publication number:
**WO 2001/085844 (15.11.2001 Gazette 2001/46)**

# (54) BRANCHED CARBONATE POLYMER COMPOSITION

VERZWEIGTE POLYCARBONAT ABMISCHUNG

COMPOSITION A BASE DE POLYMERE CARBONATE RAMIFIE

(84) Designated Contracting States:
**AT DE NL**

(30) Priority: **09.05.2000 US 568198**

(43) Date of publication of application:
**26.02.2003 Bulletin 2003/09**

(73) Proprietor: **DOW GLOBAL TECHNOLOGIES INC.**
**Midland MI 48674 (US)**

(72) Inventor: **VAN NUFFEL, Claude, T., E.**
**B-9041 Oostakker (BE)**

(74) Representative: **Casalonga, Axel**
**Bureau Casalonga & Josse**
**Bayerstrasse 71/73**
**80335 München (DE)**

(56) References cited:
**EP-A- 0 247 480** **EP-A- 0 649 724**
**US-A- 3 544 514** **US-RE- 27 682**

- **DATABASE CHEMABS [Online] CHEMICAL ABSTRACTS SERVICE, COLUMBUS, OHIO, US; retrieved from STN Database accession no. 119: 73967/DN, HCAPLUS XP002176634 & JP 05 009370 A (ASAHI DENKA KOGYO KK) 19 January 1993 (1993-01-19)**
- **DATABASE CHEMABS [Online] CHEMICAL ABSTRACTS SERVICE, COLUMBUS, OHIO, US; retrieved from STN Database accession no. 132: 251875/DN, HCAPLUS XP002176635 & JP 2000 095853 A (MITSUBISHI GAS CHEMICAL CO.) 4 April 2000 (2000-04-04)**

EP 1 285 027 B2

## Description

This invention relates to a branched carbonate polymer composition which contains a hydroxybenzotriazole compound and its use for improving the resistance to yellowing and degradation from exposure to UV light of a molded or extruded article made therefrom.

Thermoplastic carbonate polymers undergo degradation under conditions of weathering in the presence of air, moisture and light, especially ultraviolet (UV) light This degradation is manifested by yellowing and by deterioration in mechanical properties, such as impact strength, notched impact strength and maximum breaking strength under multiaxial stresses, and a general increase in brittleness.

It is known that carbonate polymers may be protected against the degrading influence of UV light when exposed to weathering by the addition of UV absorbents such as hydroxytriazole compounds, for example see US-A-4,812,498.

It has been found that branched carbonate polymers, which are very important for the production of large, dimensionally accurate parts by extrusion, become brittle more rapidly than straight-chain carbonate polymers if subjected to the same conditions in the presence of the same conventional hydroxytriazole UV absorbents, for example see . US-A-5,001,177.

US-A-5,001,177 disclosed that while conventional branched carbonate polymers combined with a specific benzotriazole derivative showed improved impact performance versus conventional branched carbonate polymers with a conventional benzotriazole derivative, the branched carbonate polymer compositions of US-A-5,001,177, even with the specific benzotriazole derivative, still demonstrated splintering, breaking and brittleness as well as significant yellowing when exposed to weathering conditions comprising UV light. The UV stabilised branched polycarbonate disclosed in EP-A 0 649 724 exhibited slightly improved mechanical properties, by controlling its molecular weight range.

In view of the deficiencies demonstrated by conventional branched carbonate polymers with a benzotriazole derivative, it would be highly desirable to provide a branched carbonate polymer composition which exhibits improved resistance to yellowing and degradation from exposure to UV light by retaining, to some degree, the desirable properties characteristic of branched carbonate polymers including good impact properties.

The invention is directed on the use of a branched carbonate polymer composition comprising

(a) a branched carbonate polymer which is the reaction product of a dihydroxy compound with a carbonic acid derivative, a chain terminator and a blanching agent, wherein the branching agent is 1,1,1-tri(4-hydroxyphenyl) ethane and

(b) a hydroxybenzotriazole derivative represented by formula 1

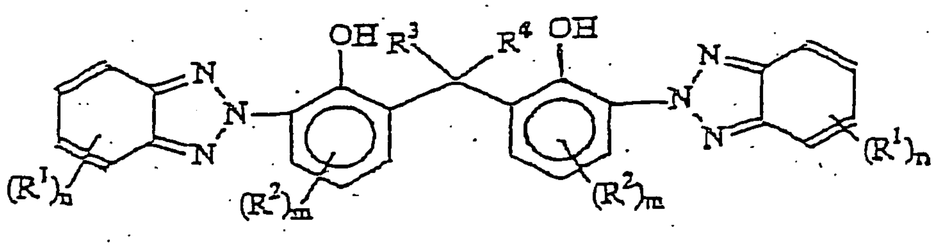

I

wherein $R^1$ and $R^2$, which may be the same or different, represent H, halogen. $C_1$-$C_{10}$ avcyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_5$-$C_{14}$ aryl; m represents 1, 2 or 3 and n represents 1, 2, 3 or 4 for improving the resistance to yellowing and degradation from exposure to UV light of a molded or extruded article made therefrom.

The present invention relates also to a branched carbonate polymer composition. The composition comprises (a) a branched carbonate polymer which is the reaction product of a dihydroxy compound with a carbonic acid derivative, a p-tertiarybutylphenol as the chain terminator, wherein the branching agent is 1,1,1-tri(4-hydroxyphenyl)ethane and (b) a hydroxybenzotriazole represented by formula 1

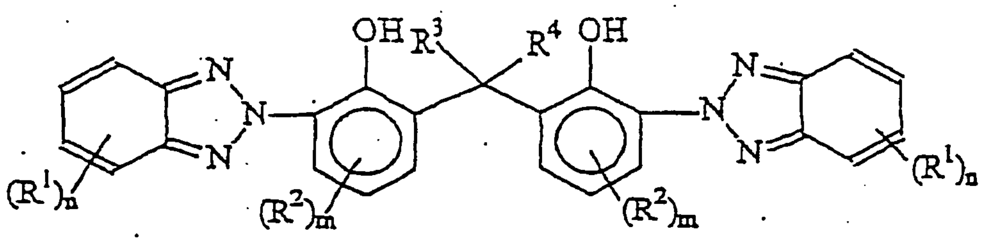

1

wherein $R^1$ and $R^2$, which may be the same or different, represent H, haiogen, $C_1$-$C_{10}$ alkyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_6$-$C_{14}$ aryl; m represents 1, 2 or 3 and n represents 1, 2, 3, or 4.

In another aspect, the present invention is a method for preparing a branched carbonate polymer composition as described hereinabove.

In a further aspect, the present invention involves a method of molding or extruding (for example, (multiple) coextrusion) a branched carbonate polymer composition prepared as described hereinabove and molded or extruded into a molded or extruded article.

In yet a further aspect, the invention involves the use of a branched carbonate polymer composition as described hereinabove in a molded or extruded article.

The branched carbonate polymer for the preparation of compositions of the present invention are especially useful in the preparation of extruded objects notably solid sheets, plates, multiwall sheets, co-extruded solid sheets and co-extruded multiwall sheets and injection molded objects such as lenses, headlamps, lamp covers, lighting cabinets, housings for printers, copiers, computer screens and other electronic devices and business machines, telecommunication devices, such as cellular phones.

Branched carbonate polymers which are employed in the present invention can be prepared by known techniques, for example several suitable methods are disclosed in US-A-3,028,365, US-A-4,529,791, and US-A-4,677,162. In general, branched carbonate polymers can be prepared from one or more dihydroxy compounds by reacting the dihydroxy compounds with a carbonic acid derivative, sometimes called a carbonate precursor and a branching agent.

Preferred dihydroxy compounds are diphenols such as hydroquinone, resorcinol, 4 4'-dihydroxyl-diphenyl bis-(hydroxyphenyl)-alkanes, such as $C_1$-$C_8$ alkylene- or $C_2$-$C_8$ alkylidene-bisphenols, bis-(hydroxyphenyl)-cycloalkanes, such as $C_5$-$C_{15}$ cycloalkylene- or $C_5$-$C_{15}$ cycloalkylidenebis-phenols, and bis-(hydroxyphenyl)-sulphides, -ethers -ketones, -sulphoxides or -sulphones; also, $\alpha$,$\alpha$'-bis-(hydroxyphenyl)diisopropylbenzene and the corresponding compounds which are alkylated or halogenated in the nucleus. The following are preferred: polycarbonates based on 2,2-bis-(4-hydroxyphenyl)-propane (bisphenol A), 2,2-bis-(4-hydroxy-3,5-dichlorophenyl)-propane (tetrachlorobisphenol A), 2,2-bis-(4-hydroxy-3,5- dibromophenyl)-propane (tetrabromobisphenol A), 2,2-bis-(4-hydroxy-3,5-dimethylphenyl)-propane (tetramethylbisphenol A), 1,1-bis-(4-hydroxyphenyl)cyclohexane (bisphenol Z), bis-(4-hydroxy-3,5-dimeth-yl-phenyl)-sulphone (dixylenosulphone), and on trinuclear bisphenol, such as $\alpha$,$\alpha$'-bis-hydroxyphenyl-p-diisopropylbenzene, and mixtures of these compounds.

Other bisphenols suitable for the preparation of branched polycarbonates are described in US-A-3,028,365; US-A-2,999,835; US-A-3,148,172; US-A-2,290,131; US-A-2,991,273; US-A-3,271,367; and US-A 2,999,846.

It is understood, of course, that the branched carbonate polymer may be derived from (1) two or more different diphenols or (2) a diphenol and a glycol or a hydroxy- or acid-terminated polyester or a dibasic acid in the event a carbonate copolymer or heteropolymer rather than a homopolymer is desired. Thus, included in the term "carbonate polymer" are the poly(ester-carbonates) of the type described in US-A-3,169,121, US-A-4,156,069, and US-A-4,260,731.

A carbonate precursor suitable for use in the present invention contains leaving groups which can be displaced from the carbonyl carbon in attack by the anion of a dihydroxy compound, and includes but is not necessarily limited to carbonic acid derivatives such as diesters of carbonic acid, carbonyl halides or acyl halides, of which most preferred is phosgene. The branching agent used in this invention is 1,1,1-tri(4-hydroxyphenyl)ethane.

The quantity of the branching agent used should be kept within the limits normally observed for branching agents, such as, equal to or greater than 0.01 mole percent based on the quantity of the chemically-incorporated dihydroxy compound, preferably equal to or greater than 0.05 mole percent, more preferably equal to or greater than 0.1 mole percent and most preferably equal to or greater than 0.5 mole percent based on the quantity of the chemically-incorporated dihydroxy compound. The branching agent is normally present in an amount equal to or less than 5 mole percent based on the quantity of the chemically-incorporated dihydroxy compound, preferably equal to or less than 3 mole percent, more preferably equal to or less than 2 mole percent, even more preferably equal to or less than 1.5 mole percent and most preferably equal to or less than 1 mole percent based on the quantity of chemically-incorporated diphenols.

Suitable chain terminating agents for use in the present invention may be aromatic compounds containing a functional group which will react with the carbonate precursor, such as aromatic acid halides or phenols especially the commonly used phenols, such as p-tertiary-butyl phenol, p-chlorophenol, 2,4,6-tribromophenol or phenol itself, phenol and the derivatives thereof, saturated aliphatic alcohols, metallic sulfites, alkyl acid chlorides, trialkyl- or triarylsilanols, monohalosilanes, amino alcohols, trialkyl alcohols, aniline and methylanaline. Of these, phenol, p-tertiary-butyl phenol, p-cumyl phenol and p-tertiaryoctyl phenol (4-(1, 1, 2, 2-tetramethylbutyl)-phenol) are the most preferred for use in the present invention.

The quantities in which these chain terminators are used is determined by the molecular weight to which the branched polycarbonates are to be adjusted. They are generally used in quantities of 0.5 to 10 mole percent based on the quantity of dihydroxy compound put into the process.

Of the aforementioned branched carbonate polymers, aromatic branched carbonate polymers are preferred and branched carbonate polymers of bisphenol A are most preferred.

The branched carbonate polymers can be prepared from these raw materials by any known processes such as the transesterification or interfacial processes (see, for example, H. Schnell, Chemistry and Physics of polycarbonates, Polymer Revue, Vol. IX. page 27 et seq, Interscience publishers New York, 1964, and US-A-3,544,514 and US Re 27,682). The interfacial process is preferred. The reaction conditions for these methods are well known.

In general, the branched carbonate polymer should have a weight average molecular weight of at least 10,000, preferably at least 15,000, more preferably at least 19,000, even more preferably at least 22,000 and most preferably at least 28,000. It has been found that the weight average molecular weight of the branched carbonate polymer should not be higher than 100,000, preferably not higher than 45,000, more preferably not higher than 39,000, even more preferably not higher than 36,000 and most preferably not higher than 32,000.

Unless otherwise indicated, the references to "molecular weight" herein refer to weight average molecular weights ($M_w$) determined on the aromatic carbonate polymers using gel permeation chromatography with a bisphenol A polycarbonate standard. It should be noted that various references refer to "viscosity average" molecular weight ($M_v$), which is not the same as "weight average" molecular weight but can be correlated or converted to $M_w$ values.

The benzotriazole derivatives suitable for use in the present invention are represented by the formula 1:

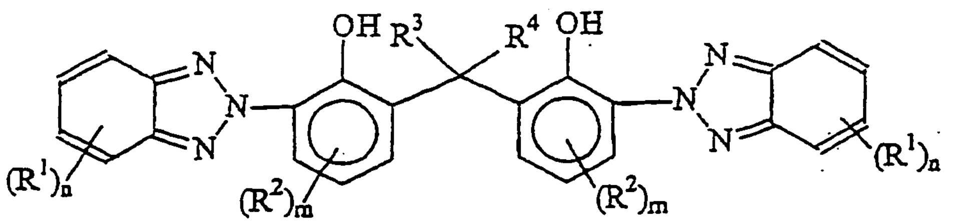

1

wherein $R^1$ and $R^2$, which may be the same or different, represent H, halogen, $C_1$-$C_{10}$ alkyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_6$-$C_{14}$ aryl; m represents 1, 2 or 3 and n represents 1, 2, 3, or 4.

$R^1$ preferably represents H, $C_1$ or $CH_3$ and $R^2$ preferably represents H, $C_1$-$C_{10}$ alkyl, cyclohexyl, $C_7$-$C_9$ aralkyl, phenyl or naphthyl. $R^3$ and $R^4$ preferably represent H or $C_1$-$C_4$ alkyl; m preferably represents 1, and n also preferably represents 1.

Particularly preferred benzotriazole derivatives (1) are those wherein $R^1$ represents H; $R^2$ represents H or $C_1$-$C_9$ alkyl; $R^3$ represents H; $R^4$ represents H; m represents 1 and n represents 1.

Dependant on the use of the carbonate polymer composition according to the present invention the benzotriazole derivative may be used in an amount from 0.01 to 15 weight percent based on the weight of the carbonate polymer composition. When the carbonate polymer composition is used for examples as extruded as solid or multiwall sheet or injection molded articles the benzotriazole derivative may be used in an amount equal to or greater than 0.01 weight percent, preferably equal to or greater than 0.05 weight percent, more preferably equal to or greater than 0.1 weight percent, even more preferably equal to or greater than 0.25 weight percent and most preferably equal to or greater than 0.3 weight percent based on the weight of the branched carbonate polymer composition. According to the present invention when the carbonate polymer composition is extruded as solid or multiwall sheet or injection molded articles the benzotriazole derivative may be used in an amount equal to or less than 1 weight percent, preferably equal to or less than 0.8 weight percent, more preferably equal to or less than 0.7 weight percent, even more preferably equal to or less than 0.6 weight percent and most preferably equal to or less than 0.5 weight percent based on the weight of the branched carbonate polymer composition.

When the carbonate polymer composition is the UV adsorption layer in a co-extruded solid sheet or a co-extruded multiwall sheet the benzotriazole derivative may be used in an amount equal to or greater than 1 weight percent, preferably equal to or greater than 2 weight percent, more preferably equal to or greater than 3 weight percent, even more preferably equal to or greater than 4 weight percent and most preferably equal to or greater than 5 weight percent based on the weight of the branched carbonate polymer composition. According to the present invention when the carbonate polymer composition is the UV adsorption layer in a co-extruded solid sheet or a co-extruded multiwall sheet the benzotriazole derivative may be used in an amount equal to or less than 15 weight percent, preferably equal to or less than 14 weight percent, more preferably equal to or less than 13 weight percent, even more preferably equal to or less than 12 weight percent, even more preferably equal to or less than 11 weight percent and most preferably equal to or less than 10 weight percent based on the weight of the branched carbonate polymer composition.

In addition, the branched carbonate polymer compositions of the present invention may also optionally contain one or more additives that are commonly used in branched carbonate polymer compositions of this type. Additives of this type include, but are not limited to: fillers, reinforcements, ignition resistant additives, compounds which stabilize polymer blend compositions against degradation caused by, but not limited to heat, light, and oxygen, colorants, antioxidants, antistats, flow enhancers, mold releases, nucleating agents, etc. Preferred examples of fillers are, for example talc, clay, wollastonite, mica, glass or a mixture thereof. Additionally, examples of preferred ignition resistance additives are, for example, halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used.

The type and amount of the additive employed is dependent on a variety of factors including the specific additive and the desired properties of the composition. If used, such additives may be present in an amount from at least 0.01 percent by weight, preferably at least 0.05 percent by weight, more preferably at least 0.1 percent by weight and most preferably at least 0.5 percent by weight based on the weight of the branched carbonate polymer composition. Generally, the additive is present in an amount less than or equal to 25 percent by weight, preferably less than or equal to 15 percent by weight, more preferably less than or equal to 10 percent by weight, even more preferably less than or equal to 5 percent by weight, and most preferably less than or equal to 1 percent by weight based on the weight of the branched carbonate polymer composition.

The branched carbonate polymer composition of the present invention can be used alone or blended with other polymer and/or copolymer resins, for example, blends with polystyrene, styrenic copolymers (for example, styrene and acrylonitrile copolymer (SAN) or styrene, acrylonitrile and butadiene terpolymer (ABS)), polysulfones, polyethers, polyether imide, polyphenylene oxides or polyesters.

Preparation of the branched carbonate polymer compositions of this invention can be accomplished by any suitable mixing means known in the art, including rollers, kneaders, single screw or multi-screw extruders. The individual components may be dry blended and subsequently melt mixed, either directly in the extruder used to make the finished article (for example, the extruded sheet), or pre-mixing in a separate extruder (for example, a Banbury mixer). Dry blends of the compositions can also be directly injection molded without pre-melt mixing.

Preferably, the branched carbonate polymer compositions of this invention are thermoplastic. When softened or melted by the application of heat, the branched carbonate polymer compositions of this invention can be formed or molded using conventional techniques such as compression molding, injection molding, gas assisted injection molding, calendering, vacuum forming, thermoforming, extrusion and/or blow molding, alone or in combination. The branched carbonate polymer compositions can also be formed, spun, or drawn into films, fibers, multi-layer laminates or extruded sheets, or can be compounded with one or more organic or inorganic substances, on any machine suitable for such purpose.

A preferred use for the branched carbonate polymer compositions of the present invention is producing solid sheet or multiwall sheet used as panes in the construction of buildings and greenhouses.

Another use of the carbonate polymers stabilized against UV light according to the present invention is the use thereof in the production of multiwall sheet by the (multiple) coextrusion process in which the weight bearing core is a layer of synthetic resin, for example of ABS or straight-chained or branched polycarbonate, preferably branched carbonate polymer, which is covered on one or both sides with UV absorption layers of branched carbonate. The UV absorption layer should have a thickness of from 10 to 150 micrometers, preferably from 20 to 100 micrometers. A covering layer from 10 to 30 micrometers preferably from 10 to 20 micrometers, in thickness substantially free from UV absorbent may be applied to the side of the UV absorption layer remote from the core.

To illustrate the practice of this invention, examples are set forth below. However, these examples do not in any manner restrict the scope of this invention

<u>EXAMPLES</u>

The composition of Example 1 and 2 were prepared by tumble blending the polycarbonate resin pellets (dried

at 120°C for at least 4 hours) and other additives for 15 minutes. The dry blended mixture was feed to a Wemer and Pfleiderer ZSK-25 25 millimeter fully intermeshing corotating twin screw extruder. The following were the compounding conditions on the ZSK-25 extruder: Barrel temperature profile: 240, 250, 260, 270, 280, 290, 300 and 300 °C; Screw speed: 250 rotations per minute (RPM); and Throughput: 10 kilogram per hour (kg/hr.). The extrudate was cooled in the form of strands and comminuted as pellets: Water bath temperature: 20°C and Cutter speed: 60. Pellets of Examples 1 and 2 and Comparative Examples A and B were used to prepare 80 mm x 80 mm x 1 mm plaques on a Arburg Allrounder CMD 370 injection molding machine having the Barrel temperature profile: 335, 330, 325 and 320 °C at the nozzle; Mold temperature: 110°C and Injection speed: 25 millimeter per second (mm/sec.).

The formulation content and performance properties of Examples 1 and 2 and Comparative Examples A and B are given in Table 1 below in parts by weight of the total composition. In Table 1:

"PC-1" preparation of branched carbonate polymer with 1,1,1-tri(4-hydroxyphenyl)ethane branching agent (THPE) commercially available from Hoechst Celanese and p-tertiary-butyl phenol (PTBP) chain terminator available from Huels and/or Schenectady: A 10 liter reactor was purged with argon and charged with 3.87 kilogram (kg) water, 0.7 kg (3.07 moles) of bisphenol A, and 3.5 gram (g) THPE (that is, 0.37 mole percent with respect to bisphenol A). During the whole synthesis the reaction temperature was controlled at 20°C. To this mixture was added 1.07 kg of a 30 weight percent caustic solution (8 moles NaOH) and the mixture was stirred until all of the bisphenol A and the THPE were dissolved. Then, the reactor was charged with 2 kg dichloromethane. The mixture was vigorously stirred and phosgene was added at a rate of 0.04 grams per second (0.4 mmoles/second). After 125 g (1.26 moles) of phosgene was added, a solution of 14.0 g (0.093 moles) PTBP (Bisphenol A / PTBP mole ratio of 33) in 90 milliliters (ml) dichloromethane was added at once. The addition of phosgene was continued until 270 g (2.73 moles) was consumed. Then a 0.6 kg of 30 weight percent caustic (4.5 moles NaOH) was added at once. After a total addition of 405 g (4.1 moles) of phosgene, a solution of 7 g (0.07 moles) triethylamine in 2 kg dichloromethane was added and stirred for another 15 minutes in order to achieve the coupling. After that another portion of 2 kg dichloromethane was added. The agitator was stopped 5 minutes after that addition. The mixture was allowed to separate into the lighter aqueous phase and the heavier polymer solution phase. After that, the heavier phase was pumped into another 10 liter (1) reactor and a solution of 800 ml HCl (20 weight percent) and 4 1 water was added. The mixture was stirred for 10 minutes at 1500 RPM and then the phases were allowed to separate. The organic phase was treated with 1800 ml phosphoric acid (10 weight percent) and 41 water. Then, the organic phase was washed four times with 500 ml water until neutral and 1375 ml heptane was added to the polymer solution in order to precipitate the polycarbonate polymer. The organic solvents (heptane and dichloromethane) were completely evaporated by hot water/steam treatment and the residual polymer was dried at 120°C overnight in a vacuum. The resulting branched carbonate polymer had a $M_w$ of 36,000, a melt flow rate (MFR) of 3.0 gram per 10 minutes (g/10 min.) as determined under conditions of 300°C and an applied load of 1.2 kilograms (kg) (unless otherwise noted all MFR were determined at 300°C/1.2 kg) and a relative solution viscosity of 1.37 (unless otherwise noted all solution viscosities were determined at 25 °C on a 0.5 weight percent solution in methylenechloride);

"PC-2" is a branched carbonate polymer prepared in the same manner as PC-1 with the exception of having a bisphenol A to PTBP mole ratio of 23. The resulting carbonate polymer had a $M_w$ of 32,000, a MFR of 6.0 g/10 min. and a relative solution viscosity of 1.32;

"PC-3" is a branched carbonate polymer available as MAKROLON™ 1143 from Bayer AG prepared from 3,3-bis-(4-hydroxy-3-methylphenyl)-2-oxo-2,3-dihydroindol branching agent and phenol as the chain terminator comprising 0.3 weight percent 2,2-methylene-bis(4-(1,1,3,3-tetramethylbutyl)-6(2H-benzotriazole-2-yl)phenol) and having a relative solution viscosity of 1.37;

"PC-4" is a branched carbonate polymer available as MAKROLON 1243 from Bayer AG prepared from 3,3-bis-(4-hydroxy-3-methylphenyl)-2-oxo-2,3-dihydroindol branching agent and phenol as the chain terminator comprising 0.3 weight percent 2,2-methylene-bis(4-(1,1,3,3-tetramethylbutyl)-6(2H-benzotriazole-2-yl)phenol) and having a relative solution viscosity of 1.32;

"LA-31" is 2,2-methylene-bis(4-(1,1,3,3-tetramethylbutyl)-6(2H-benzotriazole-2-yl)phenol) available as ADEKA STAB™ LA-31 from Adeka Argus Chemical Company;

"IRGAPHOS™ 168" is an antioxidant available from Ciba Geigy;

"Dart Impact" is falling dart instrumented impact determined according to ISO 6603 using an ICI instrumented impact tester with a 5 mm diameter driven dart having a speed of 2 meter per second (m/sec.) and a support diameter of 40 mm, for each example, four plaques were tested and an average value calculated and reported as Energy to Break in Joules (J);

"Fracture Pattern" is the dart impact fracture pattern reported as a ductile failure ("D") or a brittle failure ("B");

’’Delta Dart Impact" Dart Impact was determined on plaques after 0, 2,000, 3,000 and 5,000 hours of weather testing (see hereinbelow). Delta Dart Impact is the Energy to Break determined after 5,000 hours of weather testing minus the Energy to Break determined at 0 hours of weather testing:

$$\text{Delta Dart Impact} = \text{Dart Impact}_{5,000\ hours} - \text{Dart Impact}_{0\ hours};$$

"WOM-WET" injection molded plaques were submitted to a 5000 hours weathering test Weathering was done in a Weather-O-Meter Ci35W from the Atlas Company, using a 6.5 watt (W) Xenon lamp and a cycle of 102 minutes light and 18 minutes light plus spray of demineralised water (conditions WOM WET). The black panel temperature of 63°C, the relative humidity was 50 percent and the irradiance was 0.35 watts per square meter ($W/m^2$) at 340 nanometers (nm). Samples for testing were taken prior to weathering and after 2,000, 3,000 and 5,000 hours of weathering;

"Color" color was measured using a Hunter Colorquest Colorimeter. The measurements were taken at the same location on each injection molded plaque prior to falling dart impact testing in the transmission mode. The following value was recorded: Yellowness index YI D1925 "YI", and

"Delta YI" YI was determined on plaques after 0, 2,000, 3,000 and 5,000 hours of weather testing (see hereinabove). Delta YI is the Yellowness Index determined after 5,000 hours of weather testing minus the Yellowness Index determined at 0 hours of weather testing:

$$\text{Delta YI} = \text{YI}_{5,000\ hours} - \text{YI}_{0\ hours}$$

Table 1

| Example<br>Comparative Example | 1 | 2 | <br>A | <br>B |
|---|---|---|---|---|
| | | | | |
| Composition | | | | |
| PC-1 | balance | | | |
| PC-2 | | balance | | |
| PC-3 | | | 100 | |
| PC-4 | | | | 100 |
| LA-31 | 0.3 | 0.3 | * | * |
| IRGAPHOS 168 | 0.04 | 0.04 | | |
| | | | | |
| Properties | | | | |
| Relative Solution Viscosity | 1.37 | 1.32 | 1.37 | 1.32 |
| Dart Impact, J (Fracture Pattern) after hours of WOM-WET weathering | | | | |
| 0 hours | 4.09 (D) | 4.08 (D) | 3.69 (D) | 3.43 (D) |
| 2,000 hours | 3.34 (D) | 3.19 (D) | 2.80 (D) | 3.18 (D) |
| 3,000 hours | 3.01 (D) | 3.24 (D) | 1.20 (B) | 3.24 (D) |
| 5,000 hours | 3.00 (D) | 3.35 (D) | 0.49 (B) | 1.02 (B) |
| Delta Dart Impact, J | -1.09 | -0.73 | -3.20 | -2.41 |
| YI after hours of WOM-WET weathering | | | | |
| 0 hours | 3.04 | 3.48 | 1.77 | 1.49 |

(continued)

| Properties | | | | |
|---|---|---|---|---|
| 2,000 hours | 11.52 | 9.94 | 12.68 | 11.29 |
| 3,000 hours | 9.82 | 9.20 | 12.14 | 10.76 |
| 5,000 hours | 13.01 | 12.42 | 16.54 | 14.91 |
| Delta YI | 9.97 | 8.96 | 14.77 | 13.42 |
| *PC-3 and PC-4 include 0.3 weight percent LA-31 | | | | |

The improvement in retention of impact properties and lower color formation when using a branched carbonate polymer composition of the present invention is apparent from comparison with the controls.

## Claims

1. Use of a branched carbonate polymer composition comprising

   (a) a branched carbonate polymer which is the reaction product of a dihydroxy compound with a carbonic acid derivative, a chain terminator and a branching agent, wherein the branching agent is 1,1,1-tri(4-hydroxyphenyl) ethane and
   (b) a hydroxybenzotriazole derivative represented by formula 1

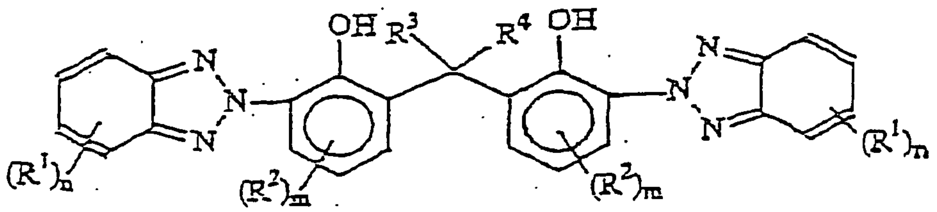

1

   wherein $R^1$ and $R^2$, which may be the same or different, represent H, halogen. $C_1$-$C_{10}$ alkyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_6$-$C_{14}$ aryl; m represents 1, 2 or 3 and n represents 1, 2, 3, or 4 for improving the resistance to yellowing and degradation from exposure to UV light of a molded or extruded article made therefrom.

2. The use of Claim 1 wherein the branching agent is present in an amount from 0.01 to 5 mole percent based on the quantity of the chemically incorporated dihydroxy compound in the branched carbonate polymer composition.

3. The use of Claim 1 wherein $R^1$ is H, Cl or $CH_3$; $R^2$ is H, $C_1$-$C_{10}$ alkyl, cyclohexyl, $C_7$-$C_9$ aralkyl, Phenyl or naphthyl; $R^3$ and $R^4$ are H or $C_1$-$C_4$ alkyl and m and n are 1.

4. The use of Claim 1 wherein $R^1$, $R^3$ and $R^4$ are H; $R^2$ is H or $C_1$-$C_9$ alkyl and m and n are 1.

5. The use of Claim 1 wherein the branched carbonate polymer has a molecular weight of from 22,000 to 39,000.

6. The use of Claim 1 wherein (a) the dihydroxy compound is bisphenol A, the carbonic acid derivative is phosgene and the chain terminator is p-tertiary-butyl phenol and wherein (b) the hydroxybenzotriazole derivative $R^1$, $R^3$ and $R^4$ are H; $R^2$ is H or $C_1$-$C_9$ alkyl and m and n are 1.

7. A branched carbonate polymer composition comprising:

   (a) a branched carbonate polymer which is made using 1,1,1-tri(4-hydroxyphenyl)ethane as a branching agent and p-tertiary-butyl phenol as a chain terminator and

(b) a hydroxybenzotriazole derivative represented by formula 1

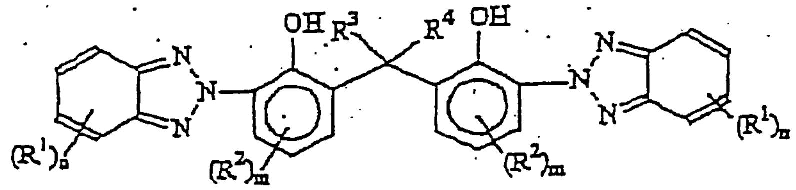

1

wherein $R^1$, $R^3$ and $R^4$ are H; $R^2$ is H or $C_1$-$C_9$ alkyl and m and n are 1.

**8.** A method for preparing a branched carbonate polymer composition which comprises the steps of combining:

(1) a branched carbonate polymer which is the reaction product of a dihydroxy compound with a carbonic acid derivative, p-tertiarybutylphenol as a chain terminator and a branching agent, wherein the branching agent is 1,1,1-tri(4-hydroxyphenyl)ethane and
(2) a hydroxybenzotriazole derivative represented by formula 1

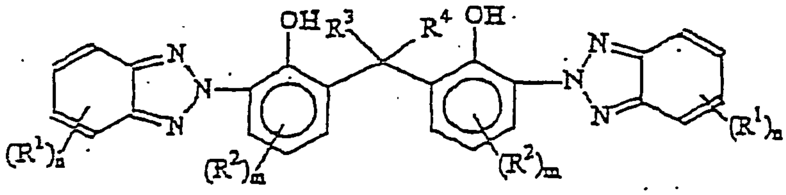

1

wherein $R^1$ and $R^2$, which may be the same or different, represent H, halogen, $C_1$-$C_{10}$ alkyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_6$-$C_{14}$ aryl; m represents 1, 2 or 3 and n represents 1, 2, 3, or 4.

**9.** The method for preparing a branched carbonate polymer composition of Claim 8 wherein (1) the dihydroxy compound is bisphenol A and the carbonic acid derivative is phosgene and wherein (2) the hydroxybenzotriazole derivative $R^1$, $R^3$ and $R^4$ are H; $R^2$ is H or $C_1$-$C_9$ alkyl and m and n are 1.

**10.** A method for producing a molded or extruded article of a branched carbonate polymer composition comprising the steps of:

(A) preparing a branched carbonate polymer composition which comprises the steps of combining:

(1) a branched carbonate polymer which is the reaction product of a dihydroxy compound with a carbonic acid derivative, p-tertiarybutylphenol as the chain terminator and a branching agent, wherein the branching agent is 1,1,1-tri(4-hydroxyphenyl)ethane and
(2) a hydroxybenzotriazole derivative represented by formula 1

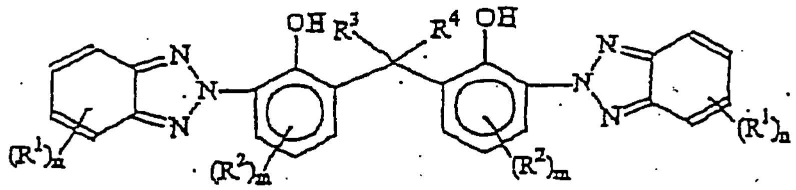

1

wherein $R^1$ and $R^2$, which may be the same or different, represent H, halogen, $C_1$-$C_{10}$ alkyl, $C_5$-$C_{10}$ cycloalkyl, $C_7$-$C_{13}$ aralkyl, $C_6$-$C_{14}$ aryl, $OR^5$ or $COOR^5$, wherein $R^5$ represents H or $C_1$-$C_4$ alkyl; $R^3$ and $R^4$ may also be the same or different and represent H, $C_1$-$C_4$ alkyl, $C_5$ or $C_6$ cycloalkyl, benzyl or $C_6$-$C_{14}$ aryl; m represents 1, 2 or 3 and n represents 1, 2, 3, or 4 and
(B) molding or extruding said branched carbonate polymer composition into a molded or extruded article.

**11.** The method for producing a molded or extruded article of a branched carbonate polymer composition of Claim 10 wherein (A)(1) the dihydroxy compound is bisphenol A and the carbonic acid derivative is phosgene and wherein (A)(2) the hydroxybenzotriazole derivative $R^1$, $R^3$ and $R^4$ are H; $R^2$ is H or $C_1$-$C_9$ alkyl and m and n are 1.

**12.** Use of Claim 1 wherein the molded or extruded article is extruded solid sheet, plate, multiwall sheet, co-extruded solid sheet, co-extruded mnltiwall sheet, injection molded lenses, headlamps, lamp covers, lighting cabinets, housings for printers, copiers, computer screens or cellular phones.

**13.** Use of Claim 1 wherein the extruded article is a solid sheet, multiwall sheet, co-extcuded solid sheet or co-extruded multiwall sheet.

**Patentansprüche**

**1.** Verwendung einer Zusammensetzung aus verzweigtem Carbonatpolymer, die Folgendes umfasst:

(a) ein verzweigtes Carbonatpolymer, welches das Reaktionsprodukt einer Dihydroxyverbindung mit einem Carbonsäurederivat, einem Kettenabbrecher und einem Verzweigungsmittel ist, wobei das Verzweigungsmittel 1,1,1-Tri(4-hydroxyphenyl)ethan ist, und
(b) ein Hydroxybenzotriazolderivat, das repräsentiert wird durch Formel 1

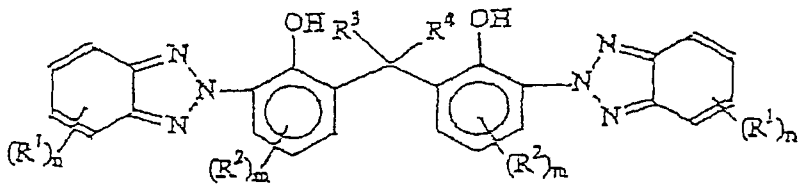

I

worin $R^1$ und $R^2$, die gleich oder verschieden sein können, H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, $OR^5$ oder $COOR^5$ repräsentieren, worin $R^5$ H oder $C_1$-$C_4$-Alkyl repräsentiert; $R^3$ und $R^4$ ebenfalls gleich oder verschieden sein können und H, $C_1$-$C_4$-Alkyl, $C_5$- oder $C_6$-Cycloalkyl, Benzyl oder $C_6$-$C_{14}$-Aryl repräsentieren; m 1, 2 oder 3 repräsentiert und n 1, 2, 3 oder 4 repräsentiert,
um die Beständigkeit eines daraus hergestellten geformten oder extrudierten Gegenstands gegen Vergilben und Degeneration aufgrund der Einwirkung von UV-Licht zu verbessern.

**2.** Verwendung nach Anspruch 1, wobei das Verzweigungsmittel in einer Menge von 0,01 bis 5 Mol-%, bezogen auf die Menge der chemisch eingebauten Dihydroxyverbindung in der Zusammensetzung aus verzweigtem Carbonatpolymer, vorhanden ist.

**3.** Verwendung nach Anspruch 1, wobei $R^1$ H, Cl oder $CH_3$ ist; $R^2$ H, $C_1$-$C_{10}$-Alkyl, Cyclohexyl, $C_7$-$C_9$-Aralkyl, Phenyl oder Naphthyl ist; $R^3$ und $R^4$ H oder $C_1$-$C_4$-Alkyl sind und m und n 1 sind.

**4.** Verwendung nach Anspruch 1, wobei $R^1$, $R^3$ und $R^4$ H sind; $R^2$ H oder $C_1$-$C_9$-Alkyl ist und m und n 1 sind.

**5.** Verwendung nach Anspruch 1, wobei das verzweigte Carbonatpolymer ein Molekulargewicht von 22.000 bis 39.000 hat.

**6.** Verwendung nach Anspruch 1, wobei (a) die Dihydroxyverbindung Bisphenol A ist, das Carbonsäurederivat Phosgen ist und der Kettenabbrecher p-tertiäres Butylphenol ist, und wobei (b) das Hydroxybenzotriazolderivat $R^1$, $R^3$ und

$R^4$ H sind; $R^2$ H oder $C_1$-$C_9$-Alkyl ist und m und n 1 sind.

**7.** Zusammensetzung aus verzweigtem Carbonatpolymer, die Folgendes umfasst:

(a) ein verzweigtes Carbonatpolymer, das hergestellt ist unter Verwendung von 1,1,1-Tri(4-hydroxyphenyl) ethan als Verzweigungsmittel und p-tertiärem Butylphenol als Kettenabbrecher, und
(b) ein Hydroxybenzotriazolderivat, das repräsentiert wird durch Formel 1

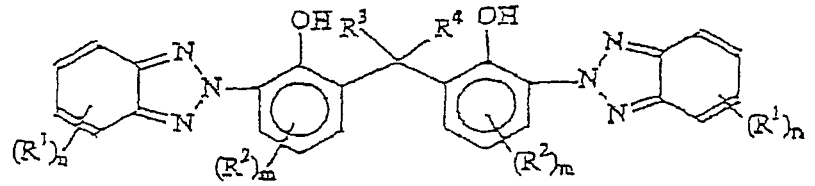

I

worin $R^1$, $R^3$ und $R^4$ H sind; $R^2$ H oder $C_1$-$C_9$-Alkyl ist und m und n 1 sind.

**8.** Verfahren zur Herstellung einer Zusammensetzung aus verzweigtem Carbonatpolymer, bei dem Folgendes kombiniert wird:

(1) ein verzweigtes Carbonatpolymer, welches das Reaktionsprodukt einer Dihydroxyverbindung mit einem Carbonsäurederivat, p-tertiärem Butylphenol als Kettenabbrecher und einem Verzweigungsmittel ist, wobei das Verzweigungsmittel 1,1,1-Tri(4-hydroxyphenyl)ethan ist, und
(2) ein Hydroxybenzotriazolderivat, das repräsentiert wird durch Formel 1

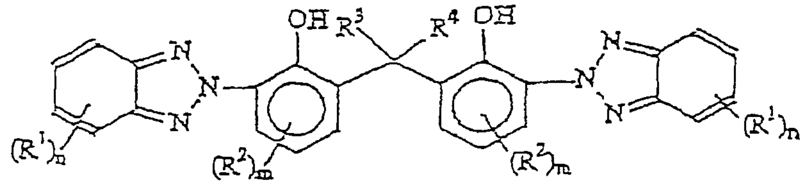

I

worin $R^1$ und $R^2$, die gleich oder verschieden sein können, H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, $OR^5$ oder $COOR^5$ repräsentieren, worin $R^5$ H oder $C_1$-$C_4$-Alkyl repräsentiert; $R^3$ und $R^4$ ebenfalls gleich oder verschieden sein können und H, $C_1$-$C_4$-Alkyl, $C_5$- oder $C_6$-Cycloalkyl, Benzyl oder $C_6$-$C_{14}$-Aryl repräsentieren; m 1, 2 oder 3 repräsentiert und n 1, 2, 3 oder 4 repräsentiert.

**9.** Verfahren zur Herstellung einer Zusammensetzung aus verzweigtem Carbonatpolymer nach Anspruch 8, wobei (1) die Dihydroxyverbindung Bisphenol A ist und das Carbonsäurederivat Phosgen ist, und wobei (2) das Hydroxybenzotriazolderivat $R^1$, $R^3$ und $R^4$ H sind; $R^2$ H oder $C_1$-$C_8$-Alkyl ist und m und n 1 sind.

**10.** Verfahren zur Herstellung eines geformten oder extrudierten Gegenstands aus einer Zusammensetzung aus verzweigtem Carbonatpolymer, mit den folgenden Schritten:

(A) Herstellen einer Zusammensetzung aus verzweigtem Carbonatpolymer, bei dem Folgendes kombiniert wird:

(1) ein verzweigtes Carbonatpolymer, welches das Reaktionsprodukt einer Dihydroxyverbindung mit einem Carbonsäurederivat, p-tertiärem Butylphenol als Kettenabbrecher und einem Verzweigungsmittel ist, wobei das Verzweigungsmittel 1,1,1-Tri(4-hydroxyphenyl)ethan ist, und
(2) ein Hydroxybenzotriazolderivat, das repräsentiert wird durch Formel 1

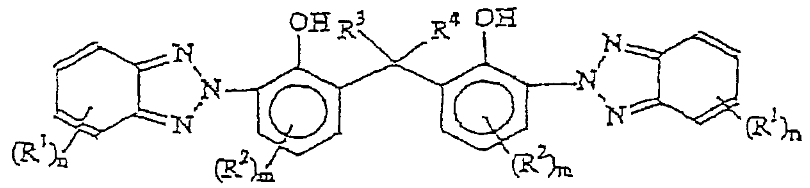

I

worin $R^1$ und $R^2$, die gleich oder verschieden sein können, H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, $OR^5$ oder $COOR^5$ repräsentieren, worin $R^5$ H oder $C_1$-$C_4$-Alkyl repräsentiert; $R^3$ und $R^4$ ebenfalls gleich oder verschieden sein können und H, $C_1$-$C_4$-Alkyl, $C_5$- oder $C_6$-Cycloalkyl, Benzyl oder $C_6$-$C_{14}$-Aryl repräsentieren; m 1, 2 oder 3 repräsentiert und n 1, 2, 3 oder 4 repräsentiert, und

(B) Formen oder Extrudieren der Zusammensetzung aus verzweigtem Carbonatpolymer zu einem geformten oder extrudierten Gegenstand.

**11.** Verfahren zur Herstellung eines geformten oder extrudierten Gegenstands aus einer Zusammensetzung aus verzweigtem Carbonatpolymer nach Anspruch 10, wobei (A)(1) die Dihydroxyverbindung Bisphenol A ist und das Carbonsäurederivat Phosgen ist, und wobei (A)(2) das Hydroxybenzotriazolderivat $R^1$, $R^3$ und $R^4$ H sind; $R^2$ H oder $C_1$-$C_8$-Alkyl ist und m und n 1 sind.

**12.** Verwendung nach Anspruch 1, wobei der geformte oder extrudierte Gegenstand extrudierte Hartfolie, Platte, mehrwandige Folie, coextrudierte Hartfolie, coextrudierte mehrwandige Folie, spritzgegossene Linsen, Scheinwerfer, Lampenabdeckungen, Lampengehäuse, Gehäuse für Drucker, Kopierer, Computerbildschirme oder Mobiltelefone ist.

**13.** Verwendung nach Anspruch 1, wobei der extrudierte Gegenstand Hartfolie, mehrwandige Folie, coextrudierte Hartfolie oder coextrudierte mehrwandige Folie ist.

**Revendications**

**1.** Utilisation d'une composition de polycarbonate ramifié comprenant :

a) un polycarbonate ramifié qui est le produit de réaction d'un composé dihydroxylé avec un dérivé d'acide carbonique, un agent de terminaison de chaînes et un agent de ramification, lequel agent de ramification est du 1,1,1-tris(4-hydroxy-phényl)-éthane,

b) et un dérivé de benzotriazole hydroxylé, de formule 1 suivante :

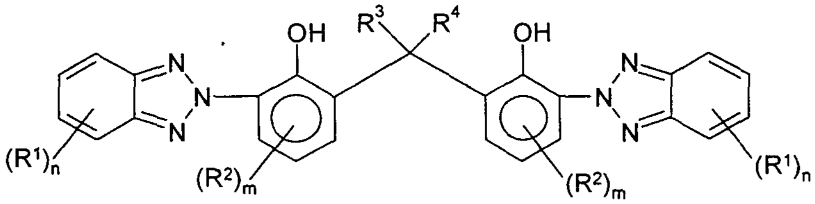

1

dans laquelle

- les symboles $R^1$ et $R^2$ représentent des entités qui peuvent être identiques ou différentes, et ils représentent chacun un atome d'hydrogène ou d'halogène, un groupe alkyle en $C_{1-10}$, cycloalkyle en $C_{5-10}$, aralkyle en $C_{7-13}$, aryle en $C_{6-14}$, ou un groupe symbolisé par $OR^5$ ou $COOR^5$ où $R^5$ représente un atome d'hydrogène ou un groupe alkyle en $C_{1-4}$,
- les symboles $R^3$ et $R^4$ représentent des entités qui peuvent elles aussi être identiques ou différentes, et ils représentent chacun un atome d'hydrogène ou un groupe alkyle en $C_{1-4}$, cycloalkyle en $C_5$ ou $C_6$, benzyle ou aryle en $C_{6-14}$,

- l'indice m vaut 1, 2 ou 3,
- et l'indice n vaut 1, 2, 3 ou 4,

pour améliorer la résistance d'un article moulé ou extrudé qui en est fait au jaunissement et à la dégradation résultant d'une exposition à de la lumière ultra-violette.

**2.** Utilisation conforme à la revendication 1, pour laquelle l'agent de ramification se trouve présent en une quantité qui représente de 0,01 à 5 % du nombre de moles du composé dihydroxylé chimiquement incorporé dans la composition de polycarbonate ramifié.

**3.** Utilisation conforme à la revendication 1, pour laquelle $R^1$ représente un atome d'hydrogène ou de chlore ou un groupe méthyle, $R^2$ représente un atome d'hydrogène ou un groupe alkyle en $C_{1-10}$, cyclo-hexyle, aralkyle en $C_{7-9}$, phényle ou naphtyle, $R^3$ et $R^4$ représentent chacun un atome d'hydrogène ou un groupe alkyle en $C_{1-4}$, et les indices m et n valent 1.

**4.** Utilisation conforme à la revendication 1, pour laquelle $R^1$, $R^3$ et $R^4$ représentent des atomes d'hydrogène, $R^2$ représente un atome d'hydrogène ou un groupe alkyle en $C_{1-9}$, et les indices m et n valent 1.

**5.** Utilisation conforme à la revendication 1, pour laquelle le polycarbonate ramifié présente une masse moléculaire de 22 000 à 39 000.

**6.** Utilisation conforme à la revendication 1, pour laquelle

a) le composé dihydroxylé est du bisphénol A, le dérivé d'acide carbonique est du phosgène, et l'agent de terminaison de chaînes est du para-tertiobutyl-phénol,
b) et le dérivé de benzotriazole hydroxylé est un dérivé où $R^1$, $R^3$ et $R^4$ représentent des atomes d'hydrogène, $R^2$ représente un atome d'hydrogène ou un groupe alkyle en $C_{1-9}$, et les indices m et n valent 1.

**7.** Composition de polycarbonate ramifié comprenant :

a) un polycarbonate ramifié qui a été préparé avec du 1,1,1-tris-(4-hydroxy-phényl)-éthane utilisé en qualité d'agent de ramification et avec du para-tertiobutyl-phénol utilisé en qualité d'agent de terminaison de chaînes,
b) et un dérivé de benzotriazole hydroxylé, de formule 1 suivante :

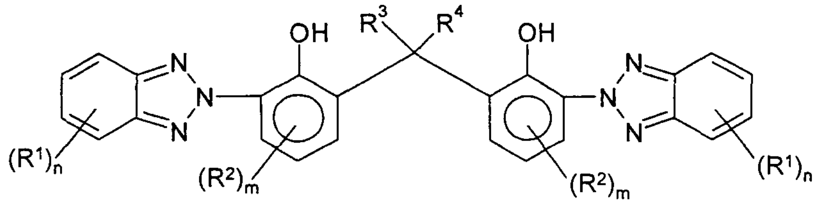

1

dans laquelle $R^1$, $R^3$ et $R^4$ représentent des atomes d'hydrogène, $R^2$ représente un atome d'hydrogène ou un groupe alkyle en $C_{1-9}$, et les indices m et n valent 1.

**8.** Procédé de préparation d'une composition de polycarbonate ramifié, lequel procédé comporte une étape consistant à combiner :

1) un polycarbonate ramifié qui est le produit de réaction d'un composé dihydroxylé avec un dérivé d'acide carbonique, du para-tertiobutyl-phénol utilisé en qualité d'agent de terminaison de chaînes et un agent de ramification, lequel agent de ramification est du 1,1,1-tris-(4-hydroxy-phényl)-éthane,
2) et un dérivé de benzotriazole hydroxylé, de formule 1 suivante :

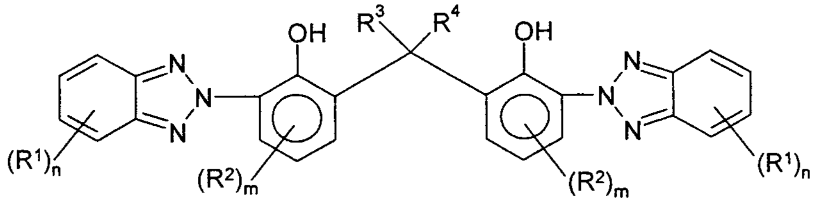

1

dans laquelle

- les symboles $R^1$ et $R^2$ représentent des entités qui peuvent être identiques ou différentes, et ils représentent chacun un atome d'hydrogène ou d'halogène, un groupe alkyle en $C_{1-10}$, cycloalkyle en $C_{5-10}$, aralkyle en $C_{7-13}$, aryle en $C_{6-14}$, ou un groupe symbolisé par $OR^5$

ou $COOR^5$ où $R^5$ représente un atome d'hydrogène ou un groupe alkyle en $C_{1-4}$,

- les symboles $R^3$ et $R^4$ représentent des entités qui peuvent elles aussi être identiques ou différentes, et ils représentent chacun un atome d'hydrogène ou un groupe alkyle en $C_{1-4}$, cycloalkyle en $C_5$ ou $C_6$, benzyle ou aryle en $C_{6-14}$,
- l'indice m vaut 1, 2 ou 3,
- et l'indice n vaut 1, 2, 3 ou 4.

**9.** Procédé de préparation d'une composition de polycarbonate ramifié, conforme à la revendication 8, dans lequel :

1) le composé dihydroxylé est du bisphénol A, et le dérivé d'acide carbonique est du phosgène,
2) et le dérivé de benzotriazole hydroxylé est un dérivé où $R^1$, $R^3$ et $R^4$ représentent des atomes d'hydrogène, $R^2$ représente un atome d'hydrogène ou un groupe alkyle en $C_{1-9}$, et les indices m et n valent 1.

**10.** Procédé de production d'un article moulé ou extrudé, fait d'une composition de polycarbonate ramifié, lequel procédé comporte les étapes suivantes :

A) préparer une composition de polycarbonate ramifié, ce qui comporte l'étape consistant à combiner :

1) un polycarbonate ramifié qui est le produit de réaction d'un composé dihydroxylé avec un dérivé d'acide carbonique, du para-tertiobutyl-phénol utilisé en qualité d'agent de terminaison de chaînes et un agent de ramification, lequel agent de ramification est du 1,1,1-tris(4-hydroxy-phényl)-éthane,
2) et un dérivé de benzotriazole hydroxylé, de formule 1 suivante:

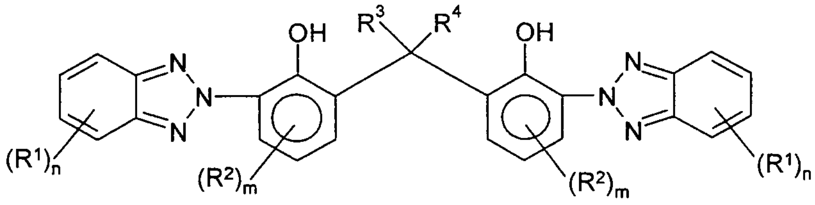

1

dans laquelle

- les symboles $R^1$ et $R^2$ représentent des entités qui peuvent être identiques ou différentes, et ils représentent chacun un atome d'hydrogène ou d'halogène, un groupe alkyle en $C_{1-10}$, cycloalkyle en $C_{5-10}$, aralkyle en $C_{7-13}$, aryle en $C_{6-14}$, ou un groupe symbolisé par $OR^5$ ou $COOR^5$ où $R^5$ représente un atome d'hydrogène ou un groupe alkyle en $C_{1-4}$,
- les symboles $R^3$ et $R^4$ représentent des entités qui peuvent elles aussi être identiques ou différentes, et ils représentent chacun un atome d'hydrogène ou un groupe alkyle en $C_{1-4}$, cycloalkyle en $C_5$ ou $C_6$, benzyle ou aryle en $C_{6-14}$,
- l'indice m vaut 1, 2 ou 3,

- et l'indice n vaut 1, 2, 3 ou 4 ;

B) et mouler ou extruder cette composition de polycarbonate ramifié, pour en faire un article moulé ou extrudé.

**11.** Procédé de production d'un article moulé ou extrudé, fait d'une composition de polycarbonate ramifié, conforme à la revendication 10, dans lequel

A-1) le composé dihydroxylé est du bisphénol A, et le dérivé d'acide carbonique est du phosgène,
A-2) et le dérivé de benzotriazole hydroxylé est un dérivé où $R^1$, $R^3$ et $R^4$ représentent des atomes d'hydrogène, $R^2$ représente un atome d'hydrogène ou un groupe alkyle en $C_{1-9}$, et les indices m et n valent 1.

**12.** Utilisation conforme à la revendication 1, dans laquelle l'article moulé ou extrudé est une feuille pleine extrudée, une plaque, une plaque multiparoi, une feuille pleine co-extrudée, une plaque multiparoi co-extrudée, une lentille moulée par injection, un phare, un couvre-lampe, une cabine d'éclairage, ou un logement pour imprimante, copieur, écran d'ordinateur ou téléphone cellulaire.

**13.** Utilisation conforme à la revendication 1, dans laquelle l'article extrudé est une feuille pleine, une plaque multiparoi, une feuille pleine co-extrudée ou une plaque multiparoi co-extrudée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4812498 A
- US 5001177 A
- EP 0649724 A
- US 3028365 A
- US 4529791 A
- US 4677162 A
- US 2999835 A
- US 3148172 A
- US 2290131 A
- US 2991273 A
- US 3271367 A
- US 2999846 A
- US 3169121 A
- US 4156069 A
- US 4260731 A
- US 3544514 A
- US RE27682 E